# FASCICULE DE BREVET EUROPEEN

(11) **EP 3 362 874 B1**
(45) Date de publication et mention de la délivrance du brevet: **01.12.2021**
(21) Numéro de dépôt: 16785397.7
(22) Date de dépôt: 13.10.2016
(51) Int. Cl.: G06F 3/01, B60K 37/06, G06F 3/0354, B60K 35/00

(54) **ACTIONNEUR DE MODULE D'INTERFACE TACTILE, MODULE D'INTERFACE TACTILE ET PROCÉDÉ DE GÉNÉRATION D'UN RETOUR HAPTIQUE**
AKTUATOR EINES TAKTILEN SCHNITTSTELLENMODULS, TAKTILES SCHNITTSTELLENMODUL UND VERFAHREN ZUR ERZEUGUNG EINER HAPTISCHEN RÜCKMELDUNG
ACTUATOR OF A TACTILE INTERFACE MODULE, TACTILE INTERFACE MODULE AND METHOD FOR GENERATING HAPTIC FEEDBACK

(30) Priorité: 13.10.2015 FR 1559740
(43) Date de publication de la demande: 22.08.2018
(73) Titulaire: DAV, 94046 Creteil Cedex (FR)
(72) Inventeur: EL-OUARDI, Nour-Eddine, 94046 Créteil Cedex (FR); AUBRY, Anthony, 94046 Créteil Cedex (FR)
(74) Mandataire: Delplanque, Arnaud
(86) Numéro de dépôt international: PCT/EP2016/074639
(87) Numéro de publication internationale: WO 2017/064218

(56) Documents cités:
- WO-A1-2006/042309
- WO-A2-2014/006336
- FR-A1- 2 938 669
- FR-A1- 2 977 334
- US-A1- 2005 225 539

## Description

La présente invention concerne un actionneur de module d'interface tactile à retour haptique, un module d'interface tactile et un procédé de génération d'un retour haptique pour transmettre un retour haptique à un utilisateur.

Dans le domaine automobile, des modules de commande multifonction, réalisés par exemple sous la forme d'un joystick ou d'un bouton rotatif, sont de plus en plus utilisés pour commander des systèmes électriques ou électroniques, tels qu'un système de climatisation, un système audio ou encore un système de navigation.

De tels modules peuvent être associés à un écran d'affichage et permettre une navigation dans des menus déroulants comportant différentes commandes relatives aux systèmes à commander.

Cependant, la présence de fonctions de plus en plus nombreuses et complexes entraîne une multiplication de ces modules. Aussi, pour augmenter le nombre de fonctions intégrées et améliorer l'ergonomie des interfaces homme-machine, l'utilisation d'un module d'interface à surface tactile, au niveau d'une surface de commande ou bien d'un écran tactile, est considérée comme un développement intéressant.

Lorsqu'un utilisateur exerce une pression sur la surface tactile d'un tel capteur, on peut mesurer la pression ou la force appliquée et/ou déterminer la localisation de l'endroit où la pression ou la force est exercée. Dans ce cas, un appui de l'utilisateur est par exemple associé à la sélection d'une commande.

En outre, pour signaler à l'utilisateur que sa commande a bien été prise en compte, que cela soit en situation normale de conduite ou d'arrêt mais également en situation dégradée (manipulation en aveugle, charge cognitive importante), il est important que l'utilisateur ait un retour haptique de manière à rester concentré sur la route en diminuant l'effort cognitif associé à la vérification de la réalisation de son action sur la surface tactile.

Pour cela, on connaît déjà des modules de commande à retour haptique comportant des actionneurs, tels que des actionneurs électromagnétiques, reliés au module d'interface pour transmettre un mouvement de vibration, de manière que l'utilisateur perçoive un retour haptique l'informant que sa commande a bien été prise en compte.

Ces actionneurs électromagnétiques comportent un stator avec un électroaimant et un noyau mobile avec un ou plusieurs aimants permanents, qui peut se déplacer en translation par rapport au stator. En alimentant l'électroaimant du stator, le noyau mobile est mis en mouvement, et ce mouvement est transmis à la surface tactile.

Un second montage, appelé "voice-coil" ou "bobine acoustique" en français puisqu'associé sur le principe technique aux haut-parleurs, s'obtient en montant à l'inverse l'électroaimant mobile par rapport à un ou plusieurs aimants permanents fixes.

On connaît en particulier un tel actionneur de module d'interface tactile à retour haptique de la Demanderesse tel que par exemple le document FR2977334. Le module d'interface comprend une surface tactile apte à détecter un appui d'un utilisateur et l'actionneur fixé à la surface tactile comporte :
- un châssis,
- un noyau mobile coopérant avec le châssis, destiné à être entraîné en mouvement entre des positions extrémales pour générer le retour haptique, et
- un stator présentant un électroaimant et configuré pour pouvoir entraîner le noyau mobile selon un mouvement de translation de va et vient.

Par un effet inertiel, la mise en mouvement du noyau mobile par le stator se transmet au châssis qui transmet à son tour le mouvement de vibration à une surface tactile à laquelle l'actionneur est fixé.

Au repos, le noyau mobile se trouve dans une position de repos flottante maintenu par des ressorts.

Une fois l'électroaimant alimenté par des signaux alternatifs, l'amplitude de déplacement en translation selon des mouvements de va et vient du noyau augmente jusqu'à atteindre un maximum.

Puis, on arrête l'alimentation de l'électroaimant et les vibrations s'évanouissent progressivement.

Toutefois, des études de la Demanderesse ont montré que les premières oscillations du noyau ne sont pas perceptibles par un utilisateur et retardent la correspondance ressentie par l'utilisateur entre une commande appliquée d'une part et le retour haptique d'autre part. De plus, le rapport entre l'énergie électrique fournie d'une part et l'énergie mécanique ressentie par l'utilisateur n'est pas optimal.

En effet, il s'est avéré qu'un retour haptique franc et percutant est mieux perçu par un utilisateur. A cet effet, l'invention vise à pallier au moins partiellement aux inconvénients ci-dessus, en proposant notamment un actionneur avec un ressenti haptique amélioré, en particulier plus franc.

À cet effet, l'invention a pour objet un actionneur pour module d'interface tactile à retour haptique tel que défini selon la revendication

Ledit actionneur peut en outre présenter une ou plusieurs des caractéristiques suivantes, prises seules ou en combinaison.

Selon un aspect, la raideur de ressort dudit amortisseur est entre 7,5 et 12,5 fois, notamment 10 fois plus grande que la raideur de ressort dudit élément élastique.

Ledit amortisseur est par exemple réalisé sous forme d'une couche d'un élastomère, en particulier en silicone.

Cette couche d'élastomère peut être surmoulée sur le noyau mobile et / ou est assemblée sur le noyau mobile par conjugaison de forme.

L'amortisseur possède notamment une dureté comprise entre 25 et 35, en particulier 30 shore A.

Selon encore un autre aspect, l'actionneur comprend deux éléments élastiques disposés respectivement sur deux côtés latéraux opposés du noyau mobile.

Les éléments élastiques peuvent être des ressorts, notamment des ressorts hélicoïdaux de poussée.

L'invention concerne en outre un module d'interface tactile à retour haptique, le module d'interface comprenant une surface tactile apte à détecter un appui d'un utilisateur, et au moins un actionneur tel que défini par les revendications 1 à 8.

L'invention concerne aussi un procédé de génération d'un retour haptique dans un module d'interface tactile à retour haptique comprenant une surface tactile apte à détecter un appui d'un utilisateur, et au moins un actionneur tel que défini par les revendications 1 à 8, caractérisé en ce qu'il comporte les étapes selon lesquelles :
- on alimente l'électroaimant en courant selon un premier sens de polarisation prédéfinie de manière à écarter le noyau mobile de la paroi de contact du châssis à l'encontre de la force du dit élément élastique,
- on alimente l'électroaimant en courant selon un second sens de polarisation prédéfinie opposé au premier sens de polarisation de manière que le sens du courant et ainsi le champ magnétique soit inversé afin de propulser le noyau mobile en direction de la paroi de contact du châssis et afin de maintenir le noyau mobile en appui contre cette paroi de contact.

Selon un aspect, l'étape pour écarter le noyau mobile peut durer entre 4 ms et 6 ms, notamment 5 ms.

Selon un autre aspect, l'étape pour propulser le noyau mobile et le maintenir contre la paroi de contact peut durer entre 4 ms et 6 ms, notamment 5 ms.

D'autres avantages et caractéristiques apparaîtront à la lecture de la description des figures suivantes, données à titre d'exemple non limitatif.
- la figure 1 est une vue schématique de côté d'un mode de réalisation d'un module d'interface tactile avec un actionneur,
- la figure 2 est une vue schématique en perspective de l'actionneur de la figure 1,
- la figure 3 est une vue schématique en perspective éclatée de l'actionneur de la figure 2,
- la figure 4 est une vue schématique en coupe longitudinale de l'actionneur de la figure 2,
- la figure 5 est un graphique de signaux de commande appliqués à un actionneur, et
- la figure 6 est un organigramme d'un mode de réalisation d'un procédé de génération d'un retour haptique.

Sur toutes les figures les mêmes références s'appliquent aux mêmes éléments.

Sur certaines figures, un repère cartésien X, Y, Z est indiqué permettant de mieux comprendre l'orientation des éléments des uns par rapport aux autres. Dans le présent exposé, la direction Z est généralement perpendiculaire à une surface tactile, à condition que celle-ci soit plane et le plan X - Y parallèle au plan de cette surface tactile.

Les réalisations décrites sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

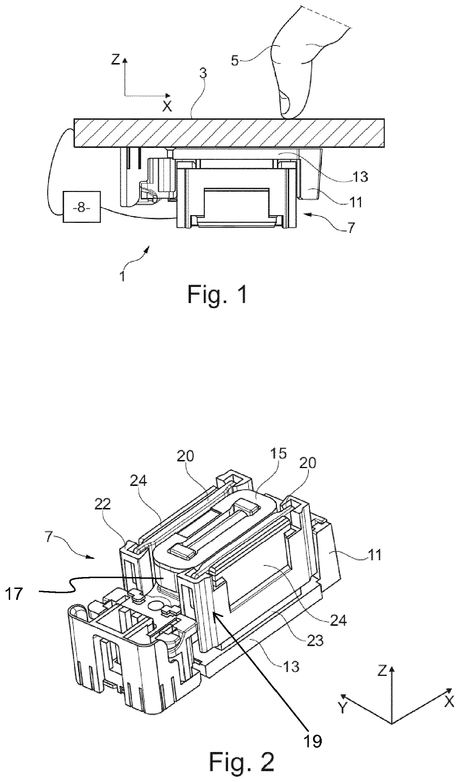

Sur la figure 1 est représenté de façon schématique un mode de réalisation d'un module 1 d'interface tactile à retour haptique comprenant une surface tactile 3 apte à détecter un appui par exemple d'un doigt 5 d'un utilisateur, et au moins un actionneur 7 de retour haptique. Le nombre des actionneurs 7 peut être de deux, trois ou quatre, voir plus et dépend en particulier de la taille de la surface tactile 3.

Le module 1 d'interface tactile à retour haptique, par exemple pour un tableau de commande de véhicule automobile, ou encore pour une console centrale de véhicule automobile, permet de commander des systèmes électriques ou électroniques du véhicule, et peut transmettre un retour haptique à un utilisateur ayant par exemple modifié ou sélectionné une commande de manière à assurer à l'utilisateur la prise en compte de la commande modifiée ou sélectionnée.

La surface tactile 3 peut être plane, mais selon des variantes, on peut également envisager des formes galbées ou bombées, voir des formes en creux. La surface tactile 3 est par exemple équipée d'un capteur capacitif ou résistif pour détecter au moins la position du doigt 5 sur la surface tactile 3 et éventuellement de plus le tracé du mouvement du doigt 5 et / ou la pression du doigt 5 exercée sur la surface tactile 3.

Cette détection de la position du doigt 5 est mise en relation par exemple avec un menu d'affichage présentant des pictogrammes et engendre par exemple un signal de commande pour commander divers équipements d'un véhicule comme un système de climatisation, un système audio, un système de téléphonie et autres.

Le mode de réalisation de la figure 1 peut être désigné comme un mode dit "à actionneur suspendu". Par suspendu, on entend que l'actionneur 7 n'est pas relié à un bâti du module d'interface tactile 1, mais seulement attaché à la surface tactile 3.

L'actionneur 7 forme alors un bloc fonctionnel bien défini, aisément montable et démontable du module d'interface 1. En effet, ce bloc fonctionnel est simplement vissé ou clipsé à la surface tactile 3, et peut donc être interchangé rapidement. L'actionneur 7 peut éventuellement être collé pour une fixation moins coûteuse au détriment de l'interchangeabilité.

Le module d'interface 1 comprend en outre une unité 8 de traitement et de commande reliée d'une part à la surface tactile 3 et d'autre part à l'actionneur 7.

L'unité 8 de traitement et de commande est par exemple un composant programmable comprenant un processeur, de la mémoire vive et de la mémoire de stockage et permet d'exécuter des instructions d'un logiciel enregistré. Il peut s'agir d'un ASIC pour « application specific integrated circuit » en anglais, c'est-à-dire un circuit intégré spécifique à une application ou encore un équipement programmable du type mini-PC.

L'unité 8 de traitement et de commande peut aussi être connectée à un afficheur non représenté, par exemple un écran d'affichage tel qu'une dalle LED ou LCD, permettant d'afficher des menus de commande de divers équipements du véhicule.

Afin de donner un retour haptique à l'utilisateur dont l'attention ne doit ne pas dévier de la route devant lui, la prise en compte d'une commande est signalée par l'activation de l'actionneur 7 dont le mouvement est transmis à la surface tactile 3.

Selon les figures 2 à 4, l'actionneur 7 comprend un châssis 11 présentant une paroi de contact 13 qui est fixée contre la surface tactile 3 pour transmettre un retour haptique.

L'actionneur 7 comprend de plus un stator 15 relié au châssis 11 et comportant un électroaimant 17, par exemple formé par un bobinage d'un fil électrique, notamment en cuivre.

Le stator 15 entoure un noyau mobile 19 pour pouvoir animer le noyau mobile 19 en translation dans deux sens opposés, perpendiculaires à la paroi de contact 13, selon la direction Z, pour générer le retour haptique. Le noyau mobile 19 comprend notamment des aimants permanents 20 sous forme de plaquettes. Ces aimants permanents sont montés dans un étrier 22, par exemple en matière plastique et présentant en coupe transversale une forme de « E ». Les branches de l'étrier 22 portent de plus des plaques métalliques ferromagnétiques 24 pour donner au noyau mobile 19 une masse plus importante afin d'augmenter l'énergie cinétique du noyau mobile 19 et pour concentrer les lignes de champ générés par les aimants permanents 20.

Le noyau mobile 19 est emprisonné entre la paroi de contact 13 et le stator 15 et soumis à la force d'au moins un, dans le présent cas de deux éléments élastiques 21.

Ces éléments élastiques 21 sont dans le présent mode de réalisation par exemple des ressorts, notamment des ressorts hélicoïdaux de poussée, qui sont disposés respectivement sur deux côtés opposés latéraux du noyau mobile 19. Plus précisément, une extrémité de ressort est en appui sur l'étrier 22 et l'autre extrémité est en appui contre le stator 15.

Il est aussi possible d'utiliser un matériau élastique, tel qu'un polymère expansé de type uréthane, un ionomère (polymère réticulé ioniquement), ou du caoutchouc.

La partie centrale du stator 15 de forme oblongue et portant l'électroaimant 17 coopère avec les branches de l'étrier 22 en « E » et guide le mouvement en translation selon Z du noyau mobile 19.

L'actionneur 7 comporte en outre un amortisseur 23 disposé entre le noyau mobile 19 et la paroi de contact 13.

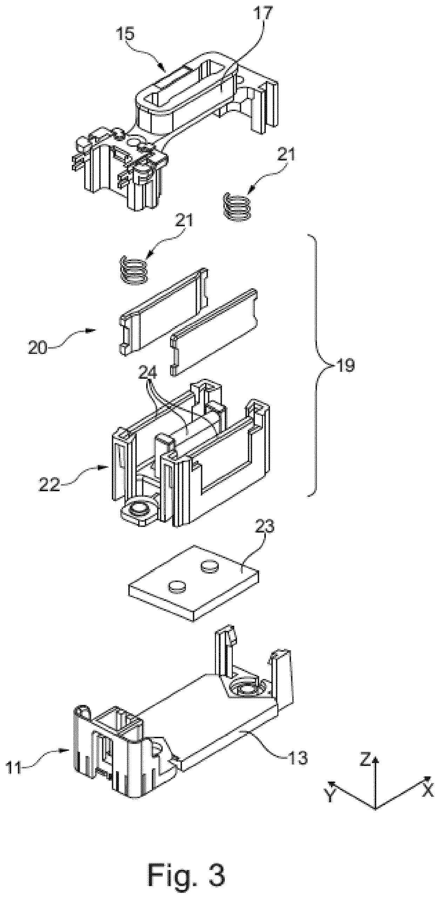

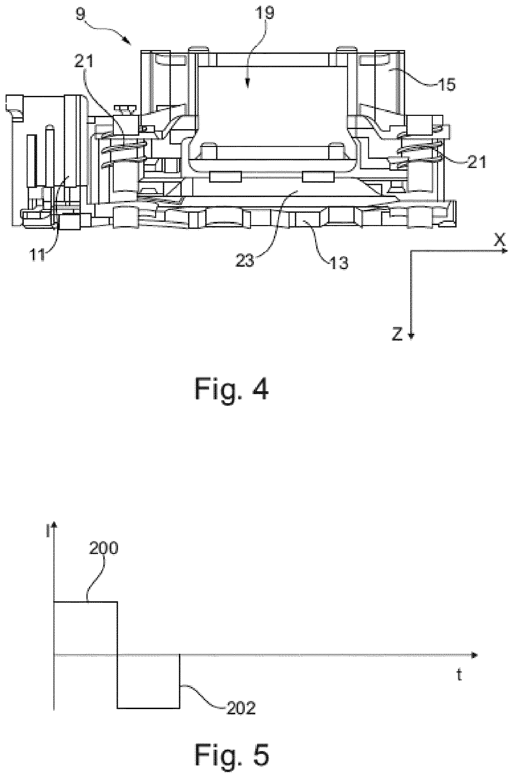

L'amortisseur 23 est par exemple réalisé sous forme d'une couche ou plaquette d'un élastomère, en particulier en silicone, qui peut selon une première variante être surmoulée sur le noyau mobile 19 ou selon une deuxième variante être assemblée sur le noyau mobile 19 par conjugaison de forme comme représenté sur la figure 3. L'amortisseur possède à titre d'exemple une épaisseur comprise entre 1,5mm et 2,5mm, notamment 2mm. Comme on le voit sur les figures 2 et 4, l'amortisseur 23 est fixé sur le dos de l'étrier 22 en « E ».

Selon une variante non représentée, l'amortisseur 23 est fixé sur la paroi de contact 13. Cependant, il est préférable que l'amortisseur 23 soit fixé au noyau mobile 19 pour augmenter la masse de cet ensemble en mouvement et donc l'énergie cinétique transmise lors de l'impact sur la paroi de contact 13.

L'amortisseur 23 possède notamment une dureté comprise entre 25 et 35, en particulier 30 shore A.

Le ou les élément(s) élastique(s) 21 est / sont dimensionné(s) de manière qu'à l'état non alimenté de l'électroaimant 17, le noyau mobile 19 applique une force d'appui en direction de la paroi de contact 13, de sorte que l'amortisseur 23 est poussé contre la paroi de contact 13. A l'état alimenté de l'électroaimant selon une polarisation prédéfinie, le noyau mobile 19 s'écarte de la paroi de contact 13.

La raideur de ressort dudit amortisseur 23 est entre 7,5 et 12,5 fois, notamment 10 fois plus grande que la raideur de ressort dudit élément élastique 21.

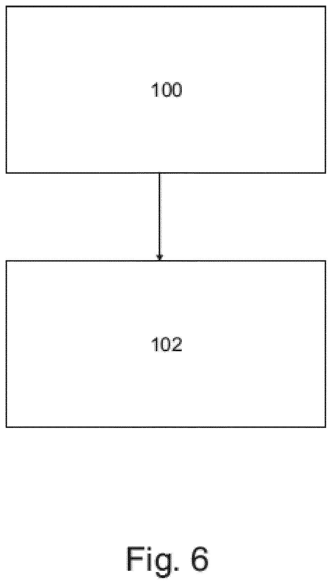

La figure 5 montre un graphique de signaux de commande en fonction du temps appliqués à un actionneur 7 et la figure 6 représente un organigramme d'un procédé de génération d'un retour haptique selon un mode de réalisation.

A la réception d'un signal de la surface tactile 3 provoqué par un appui d'un doigt 5, l'unité 8 de traitement et de commande envoie par exemple selon une étape 100 un premier signal 200 avec une première polarisation prédéfinie, par exemple sous forme carrée pour alimenter l'électroaimant 17 en courant dans un premier sens selon la direction Z de manière à écarter le noyau mobile 19 de la paroi de contact 13 du châssis 11 à l'encontre de la force des éléments élastiques 21 (les ressorts de poussée se compriment).

Les éléments élastiques 21 stockent donc dans cette phase une partie de l'énergie cinétique communiquée au noyau mobile 19.

Bien entendu, l'unité 8 peut être configurée pour alimenter l'électroaimant 17 directement en courant. Mais selon une variante, il peut également envoyer un signal de commande par exemple à un relais d'alimentation de l'électroaimant 17.

La durée de ce premier signal 200 est suffisamment longue pour que le noyau mobile 19 s'écarte au maximum, par exemple une durée comprise entre 4 ms et 6 ms, notamment 5 ms.

Puis, selon une étape 102, l'unité 8 de traitement et de commande envoie un second signal 202 avec une seconde polarisation prédéfinie opposée à la première polarisation, par exemple également de forme carrée, qui inverse le sens du courant pour inverser le champ magnétique de manière à propulser le noyau mobile 19 en direction de la paroi de contact 13 du châssis 11 et de maintenir le noyau mobile 19 en appui contre cette paroi de contact 13. Les éléments élastiques 21 assistent dans cette phase le mouvement du noyau mobile 19 (les ressorts de poussée se détendent).

Du fait que le noyau mobile 19 n'effectue ici qu'un aller et un retour, on obtient alors un retour haptique « percutant » comme un impact qui peut facilement être ressenti par le doigt 5 de l'utilisateur.

La durée de ce second signal 202 a une durée comprise entre 4 ms et 6 ms, notamment 5 ms.

Bien entendu, les durées des signaux de commandes 200 et 202 peuvent être différentes. On peut aussi envisager des formes de signaux différentes et des amplitudes différentes sans sortir du cadre du présent exposé.

On comprend donc que l'actionneur 7 permet non seulement d'avoir un retour haptique plus rapide, mais aussi plus franc et donc mieux ressenti par l'utilisateur.

Bien entendu, d'autres variantes sont envisageables sans sortir du cadre du présent exposé. Ainsi l'électroaimant 17 peut être porté par le noyau mobile 19 et l'aimant permanent 20 par le stator pour une configuration « voice-coil » ou bobine acoustique.

## Revendications

1. Actionneur (7) pour module d'interface (1) tactile à retour haptique, le module d'interface (1) comprenant une surface tactile (3) apte à détecter au moins une caractéristique d'un appui d'un utilisateur, l'actionneur (7) comportant :
- un châssis (11) destiné à être en contact avec l'interface tactile (3) par une paroi de contact (13) pour transmettre un retour haptique à la surface tactile (3),
- un stator (15) relié au châssis (11),
- un noyau mobile (19) relié par au moins un élément élastique (21) au châssis (11) et destiné à être entraîné en mouvement par le stator (15) pour générer le retour haptique,
- un électroaimant (17) et au moins un aimant permanent (20) dont l'un est porté par le stator et l'autre par le noyau mobile (19),
l'actionneur étant **caractérisé en ce qu'**il comporte en outre un amortisseur (23) disposé entre le noyau mobile (19) et la paroi de contact (13)
et **en ce que** ledit élément élastique (21) est dimensionné de manière
- qu'à l'état non alimenté de l'électroaimant, le noyau mobile (19) applique une force d'appui en direction de la paroi de contact (13)
- qu'à l'état alimenté (100) de l'électroaimant (17) en courant selon un premier sens de polarisation prédéfinie, le noyau mobile (19) s'écarte de la paroi de contact (13) du châssis (11) à l'encontre de la force du dit élément élastique (21), et
- qu'à l'état alimenté (102) de l'électroaimant (17) en courant selon un second sens de polarisation prédéfinie opposé au premier sens de polarisation de manière que le sens du courant et ainsi le champ magnétique s'inverse afin de propulser le noyau mobile (19) en direction de la paroi de contact (13) du châssis (11) et afin de maintenir le noyau mobile (19) en appui contre cette paroi de contact (13).

2. Actionneur selon la revendication 1, **caractérisé en ce que** la raideur de ressort dudit amortisseur (23) est entre 7,5 et 12,5 fois, notamment 10 fois plus grande que la raideur de ressort dudit élément élastique (21).

3. Actionneur selon la revendication 1 ou 2, **caractérisé en ce que** ledit amortisseur (23) est réalisé sous forme d'une couche d'un élastomère, en particulier en silicone.

4. Actionneur selon la revendication 3, **caractérisé en ce que** ladite couche d'élastomère est surmoulée sur le noyau mobile (19).

5. Actionneur selon la revendication 3 ou 4, **caractérisé en ce que** ladite couche d'élastomère est assemblée sur le noyau mobile (19) par conjugaison de forme.

6. Actionneur selon l'une quelconque des revendications 1 à 5, **caractérisé en ce que** l'amortisseur (23) possède une dureté comprise entre 25 et 35, en particulier 30 shore A.

7. Actionneur selon l'une quelconque des revendications 1 à 6, **caractérisé en ce qu'**il comprend deux éléments élastiques (21) disposés respectivement sur deux côtés latéraux opposés du noyau mobile (19).

8. Actionneur selon l'une quelconque des revendications 1 à 7 **caractérisé en ce que** le ou les éléments élastiques (21) sont des ressorts, notamment des ressorts hélicoïdaux de poussée.

9. Module d'interface (1) tactile à retour haptique, le module d'interface comprenant
une surface tactile (3) apte à détecter un appui d'un utilisateur, et
au moins un actionneur (7) selon l'une quelconque des revendications 1 à 8.

10. Procédé de génération d'un retour haptique dans un module d'interface (1) tactile à retour haptique comprenant une surface tactile (3) apte à détecter un appui d'un utilisateur, et au moins un actionneur (7) selon l'une quelconque des revendications 1 à 8, le procédé étant **caractérisé en ce qu'**il comporte les étapes selon lesquelles :
- on alimente (100) l'électroaimant (17) en courant selon un premier sens de polarisation prédéfinie de manière à écarter le noyau mobile (19) de la paroi de contact (13) du châssis (11) à l'encontre de la force du dit élément élastique (21),
- on alimente (102) l'électroaimant (17) en courant selon un second sens de polarisation prédéfinie opposé au premier sens de polarisation de manière que le sens du courant et ainsi le champ magnétique soit inversé afin de propulser le noyau mobile (19) en direction de la paroi de contact (13) du châssis (11) et afin de maintenir le noyau mobile (19) en appui contre cette paroi de contact (13).

11. Procédé selon la revendication 10, **caractérisé en ce que** l'étape pour écarter le noyau mobile (19) dure entre 4 ms et 6 ms, notamment 5 ms.

12. Procédé selon la revendication 10 ou 11, **caractérisé en ce que** l'étape pour propulser le noyau mobile (19) et le maintenir contre la paroi de contact (13) dure entre 4 ms et 6 ms, notamment 5 ms.

## Patentansprüche

1. Aktor (7) für taktiles Schnittstellenmodul (1) mit haptischer Rückmeldung, wobei das Schnittstellenmodul (1) eine taktile Oberfläche (3) umfasst, die geeignet ist, mindestens eine Eigenschaft eines Drucks eines Benutzers zu erkennen, wobei der Aktor (7) Folgendes aufweist:
- ein Gehäuse (11), das dazu bestimmt ist, mit der taktilen Schnittstelle (3) über eine Kontaktwand (13) in Kontakt zu stehen, um eine haptische Rückmeldung an die taktile Oberfläche (3) zu übertragen,
- einen Stator (15), der mit dem Gehäuse (11) verbunden ist,
- einen beweglichen Kern (19), der durch mindestens ein elastisches Element (21) mit dem Gehäuse (11) verbunden ist und dazu bestimmt ist, durch den Stator (15) in Bewegung versetzt zu werden, um die haptische Rückmeldung zu erzeugen,
- einen Elektromagneten (17) und mindestens einen Dauermagneten (20), wovon einer vom Stator und der andere vom beweglichen Kern (19) getragen wird,
wobei der Aktor **dadurch gekennzeichnet ist, dass** er ferner einen Dämpfer (23) aufweist, der zwischen dem beweglichen Kern (19) und der Kontaktwand (13) angeordnet ist,
und dadurch, dass das elastische Element (21) so bemessen ist,
- dass im nicht gespeisten Zustand des Elektromagneten der bewegliche Kern (19) eine Druckkraft in Richtung der Kontaktwand (13) ausübt
- dass sich im gespeisten Zustand (100) des Elektromagneten (17) mit Strom in einer ersten vorgegebenen Polarisierungsrichtung der bewegliche Kern (19) von der Kontaktwand (13) des Gehäuses (11) entgegen der Kraft des elastischen Elements (21) entfernt, und
- dass sich im gespeisten Zustand (102) des Elektromagneten (17) mit Strom in einer zweiten vorgegebenen Polarisierungsrichtung, die der ersten Polarisierungsrichtung entgegengesetzt ist, so dass sich die Stromrichtung und somit das Magnetfeld umkehrt, um den beweglichen Kern (19) in Richtung der Kontaktwand (13) des Gehäuses (11) anzutreiben, und den beweglichen Kern (19) in Anlage an dieser Kontaktwand (13) zu halten.

2. Aktor nach Anspruch 1, **dadurch gekennzeichnet, dass** die Federhärte des Dämpfers (23) zwischen 7,5 und 12,5 Mal, insbesondere 10 Mal größer als die Federhärte des elastischen Elements (21) ist.

3. Aktor nach Anspruch 1 oder 2, **dadurch gekennzeichnet, dass** der Dämpfer (23) in Form einer Schicht eines Elastomers, insbesondere aus Silikon gebildet ist.

4. Aktor nach Anspruch 3, **dadurch gekennzeichnet, dass** die Elastomerschicht auf den beweglichen Kern (19) aufgeformt ist.

5. Aktor nach Anspruch 3 oder 4, **dadurch gekennzeichnet, dass** die Elastomerschicht durch Formschluss auf dem beweglichen Kern (19) angebracht ist.

6. Aktor nach einem der Ansprüche 1 bis 5, **dadurch gekennzeichnet, dass** der Dämpfer (23) eine Härte zwischen 25 und 35, insbesondere 30 Shore A aufweist.

7. Aktor nach einem der Ansprüche 1 bis 6, **dadurch gekennzeichnet, dass** er zwei elastische Elemente (21) umfasst, die jeweils auf zwei gegenüberliegenden Seitenflächen des beweglichen Kerns (19) angeordnet sind.

8. Aktor nach einem der Ansprüche 1 bis 7, **dadurch gekennzeichnet, dass** das oder die elastischen Elemente (21) Federn sind, insbesondere Spiraldruckfedern.

9. Taktiles Schnittstellenmodul (1) mit haptischer Rückmeldung, wobei das Schnittstellenmodul eine taktile Oberfläche (3), die geeignet ist, einen Drucks eines Benutzers zu erkennen, und mindestens einen Aktor (7) nach einem der Ansprüche 1 bis 8 umfasst.

10. Verfahren zur Erzeugung einer haptischen Rückmeldung in einem Schnittstellenmodul (1) mit haptischer Rückmeldung, das eine taktile Oberfläche (3), die geeignet ist, einen Druck eines Benutzers zu erkennen, und mindestens einen Aktor (7) nach einem der Ansprüche 1 bis 8 umfasst,
wobei das Verfahren **dadurch gekennzeichnet ist, dass** es die Schritte aufweist, bei denen:
- der Elektromagnet (17) in einer ersten vorgegebenen Polarisierungsrichtung mit Strom gespeist (100) wird, um den beweglichen Kern (19) von der Kontaktwand (13) des Gehäuses (11) entgegen der Kraft des elastischen Elements (21) zu entfernen,
- der Elektromagnet (17) in einer zweiten vorgegebenen Polarisierungsrichtung, die der ersten Polarisierungsrichtung entgegengesetzt ist, mit Strom gespeist (102) wird, so dass sich die Stromrichtung und somit das Magnetfeld umkehrt, um den beweglichen Kern (19) in Richtung der Kontaktwand (13) des Gehäuses (11) anzutreiben und den beweglichen Kern (19) in Anlage an dieser Kontaktwand (13) zu halten.

11. Verfahren nach Anspruch 10, **dadurch gekennzeichnet, dass** der Schritt zum Entfernen des beweglichen Kerns (19) zwischen 4 ms und 6 ms, insbesondere 5 ms dauert.

12. Verfahren nach Anspruch 10 oder 11, **dadurch gekennzeichnet, dass** der Schritt zum Antreiben des beweglichen Kerns (19) und zum Halten desselben in Anlage an der Kontaktwand (13) zwischen 4 ms und 6 ms, insbesondere 5 ms dauert.

## Claims

1. Actuator (7) for a haptic-feedback-providing touch-interface module (1), the interface module (1) comprising a touch surface (3) that is able to detect at least one characteristic of a press of a user, the actuator (7) including:
- a chassis (11) that is intended to make contact with the touch interface (3) via a contact wall (13) in order to transmit haptic feedback to the touch surface (3);
- a stator (15) that is connected to the chassis (11);
- a movable core (19) that is connected, via at least one elastic element (21), to the chassis (11) and that is intended to be driven to move by the stator (15) in order to generate the haptic feedback; and
- an electromagnet (17) and at least one permanent magnet (20), one of which is borne by the stator and the other of which is borne by the movable core (19),
the actuator being **characterized in that** it further includes a damper (23) that is placed between the movable core (19) and the contact wall (13), and **in that** said elastic element (21) is dimensioned so
- that in the state in which the electromagnet is not powered, the movable core (19) applies a bearing force in the direction of the contact wall (13),
- that in the state (100) in which the electromagnet (17) is powered with current in a first predefined bias direction, the movable core (19) separates from the contact wall (13) of the chassis (11) against the force of said elastic element (21), and
- that in the state (102) in which the electromagnet (17) is powered with current in a second predefined bias direction that is opposite the first bias direction so that the direction of the current and thus the magnetic field inverts in order to propel the movable core (19) in the direction of the contact wall (13) of the chassis (11) and in order to maintain the movable core (19) in abutment against this contact wall (13).

2. Actuator according to Claim 1, **characterized in that** the spring constant of said damper (23) is between 7.5 and 12.5 times and in particular 10 times higher than the spring constant of said elastic element (21).

3. Actuator according to Claim 1 or 2, **characterized in that** said damper (23) takes the form of a layer of an elastomer, a silicone layer in particular.

4. Actuator according to Claim 3, **characterized in that** said elastomer layer is overmoulded on the movable core (19) .

5. Actuator according to Claim 3 or 4, **characterized in that** said elastomer layer is joined with the movable core (19) by shape engagement.

6. Actuator according to any one of Claims 1 to 5, **characterized in that** the damper (23) has a hardness comprised between 25 and 35 and in particular of 30 shore A.

7. Actuator according to any one of Claims 1 to 6, **characterized in that** it comprises two elastic elements (21) that are placed on two opposite lateral sides of the movable core (19), respectively.

8. Actuator according to any one of Claims 1 to 7, **characterized in that** the one or more elastic elements (21) are springs, in particular helicoidal compression springs.

9. Haptic-feedback-providing touch-interface module (1), the interface module comprising a touch surface (3) that is able to detect a press of a user, and at least one actuator (7) according to any one of Claims 1 to 8.

10. Method for generating haptic feedback in a haptic-feedback-providing touch-interface module (1) comprising a touch surface (3) that is able to detect a press of a user, and at least one actuator (7) according to any one of Claims 1 to 8,
the method being **characterized in that** it includes steps in which:
- the electromagnet (17) is supplied (100) with current in a first predefined bias direction so as to separate the movable core (19) from the contact wall (13) of the chassis (11) against the force of said elastic element (21); and
- the electromagnet (17) is supplied (102) with current in a second predefined bias direction that is opposite the first bias direction so that the direction of the current and thus the magnetic field is inverted in order to propel the movable core (19) in the direction of the contact wall (13) of the chassis (11) and in order to maintain the movable core (19) in abutment against this contact wall (13) .

11. Method according to Claim 10, **characterized in that** the step for separating the movable core (19) lasts between 4 ms and 6 ms, and in particular 5 ms.

12. Method according to Claim 10 or 11, **characterized in that** the step for propelling the movable core (19) and maintaining it against the contact wall (13) lasts between 4 ms and 6 ms, and in particular 5 ms.
